# FASCICULE DE BREVET EUROPEEN

(11) **EP 1 302 083 B1**
(45) Date de publication et mention de la délivrance du brevet: **04.03.2015**
(21) Numéro de dépôt: 01954087.1
(22) Date de dépôt: 12.07.2001
(51) Int. Cl.: H04W 4/06

(54) **PROCEDE DE TRANSMISSION DE DONNEES A HAUT DEBIT ET SYSTEME DE TRANSMISSION POUR LA MISE EN OEUVRE DU PROCEDE**
DATENÜBERTRAGUNGSVERFAHREN MIT HOHER GESCHWINDIGKEIT UND ÜBERTRAGUNGSSYSTEM ZUR DURCHFÜHRUNG DES VERFAHRENS
HIGH SPEED DATA TRANSMISSION METHOD AND TRANSMISSION SYSTEM THEREFOR

(30) Priorité: 12.07.2000 FR 0009086
(43) Date de publication de la demande: 16.04.2003
(73) Titulaire: Apple Inc., Cupertino, CA 95014 (US)
(72) Inventeur: PORATO, Marc, F-60240 Loconville (FR); RIEUL, François, F-78100 Saint Germain En Laye (FR)
(74) Mandataire: Lang, Johannes
(86) Numéro de dépôt international: PCT/FR2001/002264
(87) Numéro de publication internationale: WO 2002/005579

(56) Documents cités:
- WO-A-98/25422
- WO-A-99/52304
- US-A- 6 026 289

## Description

La présente invention concerne la transmission de données à haut débit, du type des données vidéo, dans un réseau de radiotéléphonie.

Le document US-A-6 026 289, par exemple, décrit une technique de diffusion sans fil sur des canaux partagés dans un système de communications cellulaires.

Les réseaux téléphoniques cellulaires offrent à leurs utilisateurs des débits ajustables selon leurs besoins. On peut ainsi transmettre des images animées numériques à travers plusieurs voies téléphoniques élémentaires, de débit classique, regroupées pour former un canal à haut débit. On peut ainsi organiser par exemple des visioconférences, recevoir des films et autres programmes audiovisuels provenant d'un serveur, ou des données autres, non "temps réel", mais dont le volume est tel qu'il convient de les transmettre à haut débit si l'on veut pouvoir les exploiter sans perte de temps.

Cependant, les réseaux téléphoniques sont dimensionnés pour le trafic vocal, ou le trafic de données d'un débit de même grandeur, si bien que la surcharge en trafic devient rapidement excessive lorsque le nombre de communications à haut débit n'est plus négligeable et qu'elles monopolisent alors les ressources de transmission.

La présente invention vise à mieux adapter les réseaux radio téléphoniques aux besoins en transmissions à haut débit.

A cet effet, l'invention concerne tout d'abord un procédé de transmission dé données à haut débit, entre un équipement émetteur et des équipements récepteurs d'un réseau de radiotéléphonie numérique tel que defini en revendication 1.

L'invention concerne aussi un système de transmission de données à haut débit, comportant un réseau de radio téléphonie numérique, avec des voies de transmission de données et un gestionnaire d'attribution des voies tel que décrit en revendication 6.

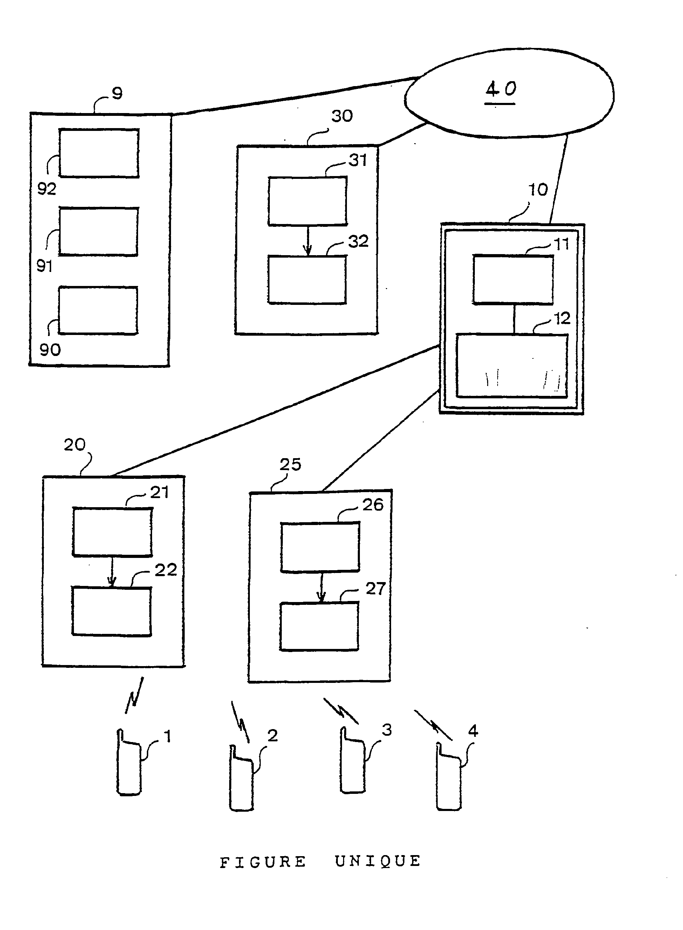

L'invention sera mieux comprise à l'aide de la description suivante d'un mode préféré de mise en oeuvre du procédé de l'invention, en référence à la figure unique qui représenté schématiquement un système de transmission de données à haut débit mettant en oeuvre le procédé de l'invention.

Le système de transmission de données à haut débit représenté comporte une pluralité d'équipements récepteurs des données, ici quatre équipements référencés 1, 2, 3, 4, reliés, à travers un réseau téléphonique 10, 20, 25, 30, 40, à un équipement émetteur de données 9.

Plus précisément ici, il s'agit d'un réseau de radiotéléphonie cellulaire numérique, ici le réseau GSM/GPRS, comportant une pluralité de stations de base dont les deux stations, 20, 25 représentées sont gérées par un gestionnaire ou serveur local 10 d'attribution des voies temporelles du réseau GSM. Le serveur local 10 est aussi dans cet exemple un commutateur du trafic et sert de concentrateur de trafic pour relier les stations 20, 25 à un réseau de transport filaire 40, ici à la norme X 25 de transport de paquets, qui forme une ossature à haut débit pour relier entre eux divers commutateurs comme celui référencé 10 auxquels sont reliées divers stations de base comme celles référencées 20 et 25. L'équipement émetteur 9, ici relié directement au réseau de transport 40, y émet, dans cet exemple, des flux d'images animées sous forme de données numériques à haut débit, représentant ici divers programmes de télévision définis par des identifiants dans une table 91 gérée par un processeur 90 de l'équipement émetteur 9. Par l'expression "haut débit", on entend ici un débit supérieur à celui offert par une voie temporelle d'une trame d'émission-réception gérée par chaque station de base 20, 25, pour relier au réseau GSM les terminaux mobiles ou équipements 1 à 4 de sa cellule radio.

En variante, certains des équipements 1 à 4 sont des équipements à liaison filaire, reliés à une cellule du réseau GSM à travers le réseau de l'Internet.

Les équipements 1 à 4, filaires ou comme ici radio, fixes ou mobiles, peuvent en particulier être des équipements fixes relativement puissants, tels que des récepteurs de télévision numérique ou des ordinateurs. Leur représentation sous forme de combinés ne correspond donc qu'à un cas particulier.

Chaque station de base 20, 25, comporte une mémoire respective 21, 26, ou table de commande de circuits de connexion 22, 27, assurant l'émission et la réception radio des données dans la trame de la cellule considérée, et leur aiguillage dans le réseau GSM en fonction de l'identité de l'équipement 1 à 4 auquel chaque voie temporelle a été affectée dans la table 21, 26.

Le serveur local 10 comporte un processeur 11 de réception et traitement de requêtes de réception des programmes, émises par les divers équipements 1 à 4. Le processeur 11 gère une mémoire ou table 12 contenant la liste des identifiants des programmes de la table 91. La table 12 comporte en outre, pour chaque programme, la liste des stations 20, 25 dans lesquelles parvient chaque programme considéré transmis par l'équipement 9. Le numéro de téléphone de ceux des équipements 1 à 4 qui sont des récepteurs actifs du programme considéré est même, dans cet exemple, mémorisé en association avec un numéro identifiant la station 20, 25 de la cellule de chaque équipement récepteur actif.

Au réseau de transport 40 est en outre relié un serveur gestionnaire central 30 de droits des équipements 1 à 4, qui comporte un processeur 31 et une mémoire ou table 32 contenant une liste spécifiant les droits des équipements 1 à 4 en ce qui concerne l'utilisation des différents flux de données numériques fournis par l'émetteur 9. La table 32 contient en outre ici le total des contenus des diverses tables 12 des divers serveurs locaux comme celui référencé 10.

Le fonctionnement du système de transmission de données à haut débit représenté va maintenant être expliqué plus en détails.

D'une façon générale, à la demande de tout équipement récepteur 1 à 4, le réseau GSM 10, 20, 25, 30, 40 transmet à celui-ci les données d'un programme, provenant de l'équipement émetteur 9, à travers un groupe de voies de diffusion communes.

La taille du groupe, ou nombre de voies temporelles associées en parallèle, est déterminée par le rapport entre le débit numérique du programme et la capacité de transmission d'une voie GSM.

Comme, ici, chaque équipement récepteur 1 à 4 est un récepteur radio, il reçoit en fait, au niveau de son antenne, la totalité des données des voies temporelles de la trame de sa cellule mais ne mémorise et traite que les données qui le concernent, dans les voies temporelles qui lui ont été affectées sur sa propre requête.

A cet effet, un équipement récepteur comme celui référencé 1, initialement au repos, émet une requête de programme vers sa station, ici la station 20, pour demander une connexion avec l'équipement émetteur 9. Cette requête est ici émise dans un canal de service ou de signalisation de la trame, et par exemple sous forme de message court SMS, ou encore dans un canal transmettant des données selon le protocole d'application sans fil WAP.

La requête est retransmise au serveur gestionnaire central 30 par la station 20, à travers le serveur local 10. Le processeur 31, qui la reçoit, consulte alors la table 32 pour ici déterminer, dans un premier temps, si au moins un autre équipement récepteur 1 à 4 du réseau a déjà formulé une requête analogue, pour le même programme, et est encore actif. Dans la négative, cela indique qu'il n'a pas été affecté à l'équipement émetteur 9 un groupe de voies de diffusion pour ce programme et qu'il ne l'émet donc pas dans le réseau. Le processeur 31 commande alors au réseau 40 d'attribuer à l'équipement émetteur 9 un tel groupe de voies d'émission, si les droits de l'équipement 1 stockés dans la table 32 permettent de satisfaire sa requête. Comme évoqué plus haut, la partie de la table 32 qui est une copie centralisée des diverses tables locales 12, indiquant en détails les programmes diffusés et les équipements récepteurs 1 à 4 qui les reçoivent, est facultative et ne sert ici qu'à éviter la perte de temps que constituerait une consultation de chaque serveur local 10 par le serveur central 30 à chaque requête d'équipement 1 à 4.

Les circuits d'émission-réception 92 mémorisent les numéros ou rangs des voies temporelles dans la trame formant chaque groupe de voies, en association avec l'identifiant du programme correspondant de la table 91. Les sources, non représentées, de ces programmes (lecteur de bande vidéo, réseau externe de fourniture de données vidéo et autres) sont alors reliés aux voies de leur groupe par les circuits 92.

Dans un deuxième temps, la table 32 indique au processeur 31 si le groupe de voies d'émission aboutit en particulier à la station 20 du requérant 1, c'est-à-dire si un autre équipement 2 à 4 reçoit déjà le programme considéré dans la cellule de la station 20. En variante, le serveur central 30 n'est qu'une simple table des droits des équipements 1 à 4 et ce sont alors les microprocesseurs 11 des divers serveurs locaux 10 qui dialoguent entre eux pour connaître l'état général des diffusions de programmes et tenir à jour les tables 12.

Dans la négative, la station 20 ne recevant pas déjà ce groupe de voies, elle est inscrite, pour une première fois, dans les tables 32 et 12 en regard du programme considéré, de même ici que l'équipement 1. Le processeur 31 commande alors la station 20 et le processeur 11 pour attribuer à l'équipement requérant 1 un groupe de voies de taille appropriée. Le processeur 11 commande en outre le réseau de transmission 40 pour relier la station émettrice 9 au serveur local 10 et donc à la station réceptrice 20. Le processeur 11 inscrit, dans la table 12, les numéros des voies de groupe attribuées à l'équipement 1 dans la trame de sa cellule. Le processeur 11 remplit à cet effet la table 21, qui indique, pour chaque voie temporelle de la trame de chaque cellule, l'identitié de l'équipement 1 à 4 auquel la voie a été attribuée. L'équipement 1 considéré reçoit à cet effet, par le canal de signalisation ci-dessus, la copie de la partie de la table 21 qui le concerne, afin de sélectionner et traiter le groupe de voies temporelles de réception qui lui ont été attribuées.

Dans l'affirmative, le groupe de voies de diffusion aboutissait donc déjà à la station 20. La station 20 est alors inscrite de même, par le processeur 11, pour une deuxième fois ou plus dans la table 12 avec l'équipement 1. Cependant, le groupe de voies de réception attribué à l'équipement 1 dans la table 21, sous la commande du processeur 11, est alors le même que celui déjà attribué à un autre équipement 2 à 4 pour le programme considéré dans la cellule de la station 20. Ce groupe de voies communes constitue donc un bus de diffusion auquel peut se relier tout équipement 1 à 4.

Les autres voies temporelles de la trame considérée restent donc disponibles pour le trafic téléphonique classique ou éventuellement d'autres programmes.

En variante, et d'une façon générale, que le réseau soit cellulaire comme ici ou non cellulaire, un premier équipement 1 étant déjà relié à l'équipement émetteur 9 suite à une requête relative à un programme déterminé, un deuxième équipement 2, formulant une requête analogue, donc pour le même programme, le réseau le relie au groupe de voies de diffusion précédemment attribué au premier équipement 1.

Dans cet exemple, le réseau étant ici cellulaire et recevant une requête actuelle d'un équipement 1 d'un cellule d'une station 20, il détermine si une transmission à haut débit a déjà été établie dans la cellule pour, dans l'affirmative, considérer l'équipement 1 formulant la requête actuelle comme étant un deuxième équipement récepteur 2 à 4, qui va donc être traité comme indiqué juste ci-dessus.

En variante, les équipements 1 à 4 ne sont pas inscrits dans la table 12, (32) et le processeur 11, (31) compte, pour chaque station 20, 25 et chaque programme, le nombre de requêtes de réception et le nombre de déconnexions correspondantes (comme expliqué ci-après). Pour une station 20, un programme reste alors inscrit, une seule fois, dans la table 12, (32) tant que le nombre de requêtes de réception est strictement supérieur au nombre de déconnexions correspondantes.

Pour tenir à jour la table 12, (32), en effaçant les équipements récepteurs 1 à 4 qui redeviennent inactifs, le processeur 11, (31) surveille, dans chaque cellule comme celle de la station 20, les équipements récepteurs 1 à 4 reliés à l'équipement émetteur 9 et il commande, par les tables 21, 26, l'interruption de la transmission des données dans la cellule considérée lorsqu'un dernier équipement récepteur 1 à 4 devient inactif. Le flux de données considéré provenant de l'équipement émetteur 9 n'est plus alors transmis à la station 20 considérée.

Les équipements 1 à 4 confirment ici cycliquement, par le canal de service, leurs requêtes de liaison avec l'équipement émetteur 9, pour éviter une déconnexion automatique par le réseau GSM. Le processeur 11 comporte à cet effet un dispositif chien de garde traitant chaque équipement récepteur 1 à 4 de la table 12, qui l'en efface en l'absence de réception de confirmation de requête de connexion pendant une durée dépassant un seuil maximal. En variante, les équipements 1 à 4 émettent explicitement des requêtes de déconnexion.

Pour gérer la mobilité des équipements récepteurs 1 à 4 et éviter toute coupure dans la réception d'un programme lorsqu'un équipement 2 à 4 actif entre dans une nouvelle cellule, le processeur 11, (31) informé de cet événement par la station de base 25 de la nouvelle cellule, considère cette entrée comme une requête de connexion à l'équipement émetteur 9, pour le programme considéré, relative à la nouvelle cellule. L'utilisateur de l'équipement 1 à 4 considéré n'a donc pas besoin d'émettre une nouvelle requête et ne perçoit pas le changement de cellule.

On conçoit que l'invention s'applique aussi à des réseaux numériques autres que le réseau GSM de cet exemple. De même, l'équipement émetteur 9 peut être relié au réseau par des liaisons radio ou filaires à haut débit et par exemple être un serveur d'un réseau informatique du genre de l'Internet fonctionnant en émetteur d'un flux continu de données (streaming) que les récepteurs peuvent capter à tout moment.

Comme émetteur, on peut aussi songer à des terminaux de visiophonie ou téléconférence (image et/ou son de qualité supérieure), chacun émettant vers plusieurs autres dans un groupe de voies communes selon l'invention.

## Revendications

1. Procédé de transmission de données à haut débit, entre un équipement émetteur (9) et des équipements récepteurs (1,2,3,4) d'un réseau de radiotéléphonie numérique, dans lequel, à la demande d'équipements récepteurs d'une pluralité de ces équipements (1,2,3,4), on transmet les données à ces équipements récepteurs à travers un groupe de voies de diffusion communes, chaque équipement récepteur (1,2,3,4) ne traite les données que sur sa propre requête, les équipements récepteurs (1,2,3,4) confirmant cycliquement leurs requêtes pour éviter une déconnexion automatique par le réseau, procédé **caractérisé par le fait que** :
un premier équipement récepteur (1) transmet au réseau une requête de connexion avec l'équipement émetteur (9),
- le réseau, recevant la requête, fournit à l'équipement émetteur (9) le groupe de voies de transmission, et il y relie le premier équipement récepteur (1) et
- un deuxième équipement récepteur (2) formulant une requête analogue, le réseau le relie audit groupe de voies de diffusion communes.

2. Procédé selon la revendication 1, dans lequel, le réseau téléphonique étant cellulaire et recevant une requête actuelle d'un équipement récepteur (2) d'une cellule, il détermine si une transmission à haut débit a déjà été établie dans ladite cellule pour, dans l'affirmative, considérer l'équipement (2) formulant la requête actuelle comme étant un deuxième équipement récepteur.

3. Procédé selon la revendication 2, dans lequel le réseau surveille, dans chaque cellule, les récepteurs (1, 2, 3, 4) reliés à l'équipement émetteur (9) et il interrompt la transmission des données dans la cellule considérée lorsqu'un dernier équipement récepteur devient inactif.

4. Procédé selon l'une des revendications 2 et 3, dans lequel, pour gérer la mobilité d'un récepteur d'une cellule à une nouvelle cellule du réseau, le réseau détecte l'entrée du récepteur (1,2,3,4) dans la nouvelle cellule et considère cette entrée comme une requête relative à la nouvelle cellule, évitant ainsi tout risque de coupure dans la réception de données

5. Procédé selon l'une des revendications 1 à 4, dans lequel les récepteurs (1, 2, 3, 4) transmettent leurs requêtes par un canal de service.

6. Système de transmission de données à haut débit, comportant un réseau de radiotéléphonie numérique (10,20,25,30,40), avec des voies de transmission de données et un gestionnaire (10,30) d'attribution des voies, système **caractérisé par le fait que** le gestionnaire (10,30) comporte des moyens (11) pour tenir à jour une table (12,32) de requêtes de transmission de divers équipements récepteurs (1, 2,3,4) et pour, à leur demande, leur attribuer un même groupe de voies communes de diffusion de données.

## Patentansprüche

1. Verfahren zum Übertragen von Daten mit hoher Rate zwischen einer Sendevorrichtung (9) und Empfangsvorrichtungen (1, 2, 3, 4) eines digitalen Funktelefonnetzwerks, bei welchem, auf Anfrage von Empfangsvorrichtungen einer Vielzahl dieser Vorrichtungen (1, 2, 3, 4), die Daten an diese Empfangsvorrichtungen über eine Gruppe von gemeinen Übertragungswegen gesendet werden, jede Empfangsvorrichtung (1, 2, 3, 4) die Daten nur auf ihre eigene Anfrage hin bearbeitet, wobei die Empfangsvorrichtungen (1, 2, 3, 4) ihre Anfragen zyklisch bestätigen, um eine automatische Abmeldung durch das Netzwerk zu vermeiden, wobei das Verfahren **dadurch gekennzeichnet ist, dass**:
eine erste Empfangsvorrichtung (1) an das Netzwerk eine Anfrage zur Anmeldung mit der Sendevorrichtung (9) sendet,
- das Netzwerk, das die Anfrage empfängt, der Sendevorrichtung (9) die Gruppe von Übertragungswegen bereitstellt und die erste Empfangsvorrichtung (1) damit verbindet, und
- wenn eine zweite Empfangsvorrichtung (2) eine analoge Anfrage formuliert, das Netzwerk sie mit der Gruppe von gemeinen Übertragungswegen verbindet.

2. Verfahren nach Anspruch 1, bei welchem das Telefonnetzwerk zellular ist und eine aktuelle Anfrage einer Empfangsvorrichtung (2) von einer Zelle empfängt und bestimmt, ob eine Übertragung mit hoher Rate in der Zelle bereits hergestellt wurde, um, falls ja, die Vorrichtung (2), die die aktuelle Anfrage formuliert, als eine zweite Empfangsvorrichtung zu berücksichtigen.

3. Verfahren nach Anspruch 2, bei welchem das Netzwerk in jeder Zelle die Empfänger (1, 2, 3, 4) überwacht, die mit der Sendevorrichtung (9) verbunden sind, und die Datenübertragung in der Zelle unterbricht, die berücksichtigt wird, wenn eine letzte Empfangsvorrichtung inaktiv wird.

4. Verfahren nach einem der Ansprüche 2 und 3, bei welchem, um die Mobilität eines Empfängers von einer Zelle zu einer neuen Zelle des Netzwerks zu verwalten, das Netzwerk den Eintritt des Empfängers (1, 2, 3, 4) in die neue Zelle detektiert und diesen Eintritt als eine Anfrage in Bezug auf die neue Zelle berücksichtigt, wodurch jegliches Risiko der Unterbrechung in der Datenübertragung vermieden wird.

5. Verfahren nach einem der Ansprüche 1 bis 4, bei welchem die Empfänger (1, 2, 3, 4) ihre Anfragen über einen Dienstkanal übertragen.

6. System zur Übertragung von Daten mit hoher Rate, umfassend ein digitales Funktelefonnetzwerk (10, 20, 25, 30, 40) mit Datenübertragungswegen und einem Verwalter (10, 30) zum Zuordnen der Wege, wobei das System **dadurch gekennzeichnet ist, dass** der Verwalter (10, 30) Mittel (11) umfasst zum Aktualisieren einer Tabelle (12, 32) von Übertragungsanfragen von unterschiedlichen Empfangsvorrichtungen (1, 2, 3, 4) und zum Zuordnen, auf ihre Anfrage hin, einer selben Gruppe von gemeinen Datenübertragungswegen.

## Claims

1. Method of high bit rate data transmission between a transmitter appliance (9) and receiver appliances (1, 2, 3, 4) of a digital radiotelephony network, wherein, upon the request of receiver appliances of a plurality of these appliances (1, 2, 3, 4), the data are transmitted to these receiver appliances through a group of common broadcasting paths, each receiver appliance (1, 2, 3, 4) processes the data only upon its own request, the receiver appliances (1, 2, 3, 4) cyclically confirming their requests in order to avoid an automatic disconnection by the network, the method being **characterized in that**:
a first receiver appliance (1) transmits to the network a request for connecting with the transmitter appliance (9),
- the network, upon receiving the request, provides to the transmitter appliance (9) the group of transmission paths and connects the first receiver appliance (1) thereto, and
- upon a second receiver appliance (2) formulating an analogous request, the network connects it to the group of common broadcasting paths.

2. The method according to claim 1, wherein, the telephone network being cellular and receiving a current request from a receiver appliance (2) of a cell, it determines whether a high bit rate transmission has already been established in said cell so as, in the affirmative, to regard the appliance (2) formulating the current request as being a second receiver appliance.

3. The method according to claim 2, wherein the network monitors, in each cell, the receivers (1, 2, 3, 4) linked to the sender appliance (9) and it interrupts the data transmission in the relevant cell when a last receiver appliance becomes inactive.

4. Method according to one of claims 2 and 3, wherein, in order to manage the mobility of a receiver from a cell to a new cell of the network, the network detects the entry of the receiver (1, 2, 3, 4) into the new cell and regards this entry as a request relating to the new cell, thereby avoiding any risk of interruption in the data reception.

5. The method according to one of claims 1 to 4, wherein the receivers (1, 2, 3, 4) transmit their requests via a service channel.

6. System for high bit rate data transmission comprising a digital radiotelephony network (10, 20, 25, 30, 40), with data transmission paths and a manager (10, 30) for allocating the paths, wherein the system is **characterized in that** the manager (10, 30) comprises means (11) for updating a table (12, 32) of transmission requests from various receiver appliances (1, 2, 3, 4) and for, at their request, allocating them a same group of common data broadcasting paths.
